**Europäisches Patentamt**

**European Patent Office**

**Office européen des brevets**

(19)

(11) Veröffentlichungsnummer: **0 239 564 B1**

(12)

# EUROPÄISCHE PATENTSCHRIFT

(45) Veröffentlichungstag der Patentschrift: **24.07.91**

(51) Int. Cl.⁵: **B23B 3/06**, B23B 3/16, B23Q 1/02

(21) Anmeldenummer: **87890058.8**

(22) Anmeldetag: **25.03.87**

(54) Drehmaschine.

(30) Priorität: **26.03.86 AT 811/86**

(43) Veröffentlichungstag der Anmeldung:
**30.09.87 Patentblatt 87/40**

(45) Bekanntmachung des Hinweises auf die
Patenterteilung:
**24.07.91 Patentblatt 91/30**

(84) Benannte Vertragsstaaten:
**CH DE FR GB LI**

(56) Entgegenhaltungen:
**DE-A- 3 313 980
DE-A- 3 344 063
DE-U- 8 233 456
DE-U- 8 534 705**

**INDUSTRIEANZEIGER JG. 107, NR. 72, 6 SEP-
TEMBER 1985, SEITEN 148-152, ESSEN, D; G.
GUZZONI**

(73) Patentinhaber: **MASCHINENFABRIK HEID AK-
TIENGESELLSCHAFT**
**Ernstbrunner Strasse 31-33**
**A-2000 Stockerau(AT)**

(72) Erfinder: **Holy, Franz**
**Dr.Adolf Schärfstrasse 3**
**A-2000 Stockerau(AT)**

(74) Vertreter: **Müllner, Erwin, Dr. et al**
**Patentanwälte Dr. Erwin Müllner Dipl.-Ing.**
**Werner Katschinka Postfach 159 Weihburggasse 9**
**A-1010 Wien(AT)**

**Beschreibung**

Die Erfindung betrifft eine Drehmaschine mit einem Werkzeugsystem, das auf einem Schlittensystem angeordnet ist, mit einer Führung für einen Reitstock und mit einer Hauptführung für das Schlittensystem, wobei das Maschinenbett abgewinkelt ist und die Führung für den Reitstock und die Hauptführung für das Schlittensystem im Winkel zueinander stehen.

Eine Drehmaschine der eingangs genannten Art ist in der DE-OS 33 44 063 beschrieben. Das Bett dieser Drehmaschine hat im Querschnitt ungefähr trapezoidale Form, wobei das Oberteil aus zwei geneigten Flächen geformt und mit der Scheitellinie nach oben gerichtet ist. Diese Flächen sind mit prismatischen Führungen zum Tragen und zum Führen des Schlittens mit dem Werkzeugrevolver und des Reitstocks ausgestattet. Durch die Form des Bettes mit den Führungen kann ein System erzeugt werden, in dem der Schlitten mit dem Werkzeugrevolver und der Reitstock sich frei und ohne Interferenz über die ganze Länge der Führungen bewegen können und in dem ein zweiter Schlitten mit dem Werkzeugrevolver an den gleichen Führungen vorgesehen ist, an welchen sich der Reitstock bewegt.

Auch aus der DE-OS 33 13 980 ist eine Drehmaschine mit zwei Führungsbahnen, die im Winkel zueinander stehen, bekannt.

Bei Drehmaschinen ist das Werkzeug grundsätzlich in Z-Richtung (Längsvorschub) und X-Richtung (Planvorschub) verschiebbar. Um die Anzahl der Aufspannungen der oft viele Tonnen schweren Werkstücke gering zu halten, oder die Bearbeitungsdurchlaufzeit zu beschleunigen, werden Drehmaschine immer häufiger mit Bearbeitungseinrichtungen ausgestattet, die neben Dreharbeiten auch Bohr-und Fräserarbeiten auf der Drehmaschine gestatten. Diese Bearbeitungseinrichtungen müssen aber zusätzlich in Y-Richtung (Vertikalachse) verschiebbar sein, außerdem muß das Werkstück um die C-Achse (Rundachse) einstellbar sein.

Für die Realisierung der Vertikalachse sind verschiedene Systeme bekannt. Eine Möglichkeit besteht darin, auf den Planschlitten eine vertikal verschiebbare Bearbeitungseinheit aufzusetzen. Eine solche Lösung benötigt aber viel Platz und ist daher nur für Großdrehmaschinen geeignet. Bei einer etwas anderen Ausführungsform ist ein über eine Rundsäule höhenverstellbares und schwenkbares System angeordnet. In dieses sind aber keine Drehwerkzeuge einsetzbar, sodaß ein eigener Frässchlitten für Bohr- und Fräsarbeiten notwendig ist.

Eine weitere Möglichkeit besteht darin, einen Revolver mit A-Achse zu verwenden. Der Fräser ist dabei außerhalb der A-Achse gespannt, sodaß sich durch Drehung um die A-Achse die Höhe des Fräsers ändert. Zweckmäßigerweise wird so ein Revolver als doppelschwenkbarer Revolver mit A- und B-Achse ausgeführt.

Schließlich kann eine Y-Bewegung durch eine gleichzeitige Drehung des Werkstückes um die C-Achse und Drehung eines Scheibenrevolvers simuliert werden. In diesem Fall ist jedoch die Steuerung sehr aufwendig und eine B-Achse (Bohren schräg zur Planebene) nicht realisierbar.

Es ist die Aufgabe vorliegender Erfindung, eine Drehmaschine zu schaffen, an der trotz kompakter Bauweise und einfacher Steuerprogramme eine entlang der drei Achsen Z, X, Y verschiebbare Bearbeitungseinheit angebracht werden kann.

Diese Aufgabe wird erfindungsgemäß dadurch gelöst, daß bei einer Drehmaschine der eingangs genannten Art das Schlittensystem aus drei Schlitten besteht, sodaß das Werkzeugsystem in drei unabhängigen Richtungen Z, X, Y verfahrbar ist, daß der Z-Schlitten auf der Hauptführung verschiebbar angeordnet ist und daß am Z-Schlitten der Y-Schlitten und daß am Y-Schlitten der X-Schlitten angeordnet ist.

Im Gegensatz zu den bekannten Drehmaschinen, bei denen sich der Y-Schlitten auf dem Planschlitten (X-Schlitten) befindet, ist es bei der erfindungsgemäßen Drehmaschine gerade umgekehrt: hier befindet sich der Planschlitten auf dem Y-Schlitten, und der Y-Schlitten befindet sich auf dem Längsschlitten (Z-Schlitten). Dabei ist das Maschinenbett abgewinkelt ausgeführt, sodaß die Ebene der Führung für den Reitstock im Winkel zur Ebene der Hauptführung für das Schlittensystem liegt. Auf diese Art wird viel zusätzlicher Raum gewonnen, sodaß - trotz Vorhandensein des Schlittensystems - sämtliche Werkzeugsysteme, vom einfachsten Revolverkopf bis zu den Magazinsystemen, zur Anwendung gelangen können. Planschlitten und Revolverkopf können in normaler, serienmäßiger Ausstattung aus einem Baukastensystem zur Anwendung kommen.

Es ist zweckmäßig, wenn der X-Schlittenunterteil um die B-Achse drehbar auf dem Y-Schlitten befestigt ist. In diesem Fall können Bohrungen nicht nur in der Höhenebene, sondern auch im Winkel dazu durchgeführt werden.

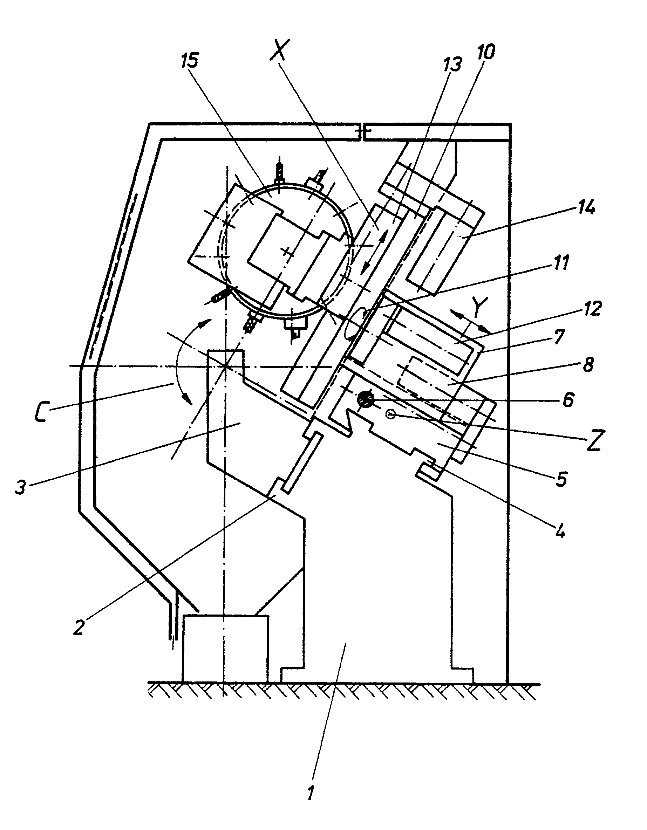

Ein Ausführungsbeispiel der Erfindung wird anhand der beiliegenden Figur näher beschrieben. In dieser Figur ist eine erfindungsgemäße Drehmaschine im Schnitt dargestellt. Das Maschinenbett 1 ist abgewinkelt und trägt auf der einen Seite eine Führung 2 für einen Reitstock 3. An dieser Führung kann zusätzlich oder alternativ auch eine Lünette oder ein zweiter Schlitten angebracht werden.

Auf der anderen Seite weist das Maschinenbett 1 die Hauptführung 4 für das Schlittensystem auf.

Auf dieser Hauptführung ist der Z-Schlitten 5 in Richtung der Z-Achse, die normal auf der Zeichenebene der Figur steht, verschiebbar angeordnet. Die Verschiebung wird durch den Z-Antrieb 6 gesteuert. Es ist also, wie allgemein üblich, der Z-Schlitten als Bettschlitten realisiert.

Auf dem Z-Schlitten 5 ist der Y-Schlitten 7 angeordnet. Er ist mittels des Y-Antriebes 8 in Richtung Y-Achse, welche durch den mit Y bezeichneten Doppelpfeil angedeutet ist, verschiebbar.

Auf dem Y-Schlitten 7 ist der Planschlittenunterteil 10 um die Schwenkachse 11 drehbar befestigt. Die Drehbewegung wird durch den B-Antrieb 12 gesteuert.Auf dem Planschlitten-Unterteil 10 ist der X-Schlitten oder Planschlitten 13 angeordnet. Dieser ist mittels des X-Antriebs 14 in Richtung der X-Achse, die durch den mit X bezeichneten Doppelpfeil angedeutet ist, verschiebbar.

Auf dem Planschlitten 13 ist schließlich ein Standard-Revolverkopf 15 angeordnet, in den Fräs-, Bohr- und Drehwerkzeuge eingesetzt werden können.

Für Dreharbeiten und mittiges Bohren bzw. Fräsen werden die Schlitten so eingestellt, wie dies in der Figur dargestellt ist. Für außermittige Bohr- und Fräsarbeiten wird der Revolverkopf 15 mittels des Y-Schlittens 7 entlang der Y-Achse verfahren. Die Lage der Bohrlöcher bzw. Ausfräsungen auf dem Werkstück wird durch Drehung des Werkstükkes um die C-Achse, die durch den mit C bezeichneten Doppelpfeil angedeutet ist, eingestellt.

Aus der Figur ist der Raumgewinn durch die erfindungsgemäße Konstruktion deutlich ersichtlich. Wenn man in Gedanken die Abwinkelung des Maschinenbetts 1 "gerade biegt", sodaß die beiden Führungen 2 und 4 in einer Ebene liegen, ist unmittelbar ersichtlich, daß für einen Standard - Revolverkopf kein Platz mehr verbleibt.

## Patentansprüche

1. Drehmaschine mit einem Werkzeugsystem (15), das auf einem Schlittensystem (5, 7, 13) angeordnet ist, mit einer Führung (2) für einen Reitstock (3) und mit einer Hauptführung (4) für das Schlittensystem (5, 7, 13), wobei das Maschinenbett abgewinkelt ist und die Führung (2) für den Reitstock (3) und die Hauptführung (4) für das Schlittensystem (5, 7, 13) im Winkel zueinander stehen, dadurch gekennzeichnet, daß das Schlittensystem (5, 7, 13) aus drei Schlitten besteht, sodaß das Werkzeugsystem (15) in drei unabhängigen Richtungen Z, X, Y verfahrbar ist, daß der Z-Schlitten (5) auf der Hauptführung (4) verschiebbar angeordnet ist und daß am Z-Schlitten (5) der Y-Schlitten (7) und daß am Y-Schlitten (7) der X-Schlitten (13) angeordnet ist.

2. Drehmaschine nach Anspruch 1, dadurch gekennzeichnet, daß der X-Schlittenunterteil (10) um die B-Achse (11) drehbar auf dem Y-Schlitten (7) befestigt ist.

## Claims

1. Lathe with a tool system (15) which is installed on a runner system (5,7,13), having a guideway for a headstock (3) and a principal guideway (4) for the runner system (5,7,13), wherein the lathe bed is angled over and the guideway (2) for the headstock (3) and the principal guideway (4) for the runner system (5,7,13) extend at an angle to each other, characterised in that the runner system (5,7,13) comprises three runners so that the tool system (15) is displaceable in three independent directions Z,X,Y, that the Z-runner (5) is displaceably arranged on the principal guideway (4), that the Y-runner (7) is installed on the Z-runner (5) and that the X-runner (13) is installed on the Y-runner (7).

2. Lathe according to claim 1, characterised in that the lower part (10) of the X-runner is pivotally secured around the B-axis (11) on the Y-runner (5).

## Revendications

1. Tour comportant un système (15) d'outils qui est disposé sur un système de chariotage (5, 7, 13) comportant un guidage (2) destiné à une poupée mobile (3) et un guidage principal (4) destiné au système de chariotage (5, 7, 13), le banc du tour étant coudé et le guidage (2) destinée à la poupée mobile (3) ainsi que le guidage principal (4) destiné au système de chariotage (5, 7, 13) formant un angle l'un par rapport à l'autre, caractérisé en ce que le système de chariotage (5, 7, 13) est constitué par trois chariots de façon telle que le système (15) d'outils puisse être déplacé dans trois directions indépendantes Z, X, Y, que le chariot (5) d'axe Z soit disposé de façon mobile en translation sur le guidage principal (4) et que le chariot (7) d'axe Y soit disposé sur le chariot d'axe Z, et le chariot (13) d'axe X sur le chariot (7) d'axe Y.

2. Tour selon la revendication 1, caractérisé en ce que la partie inférieure (10) du chariot d'axe X est montée à rotation autour de l'axe B (11) sur le chariot (7) d'axe Y.